# EUROPÄISCHE PATENTSCHRIFT

(11) **EP 0 436 878 B1**
(45) Veröffentlichungstag und Bekanntmachung des Hinweises auf die Patenterteilung: **08.01.1997**
(21) Anmeldenummer: 90124503.5
(22) Anmeldetag: 18.12.1990
(51) Int. Cl.: B32B 31/12, B29C 55/02

(54) **Verfahren und Vorrichtung zum Kaschieren einer Folie mit einer gereckten Folie sowie mehrschichtige Folie aus einer gereckten und ungereckten Folie**
Laminate produced from stretched and unstretched webs, and method of its manufacture
Stratifié ayant des tissus étirés et non-étirés, et procédé de réalisation d'un tel article

(30) Priorität: 10.01.1990 DE 4000495
(43) Veröffentlichungstag der Anmeldung: 17.07.1991
(73) Patentinhaber: Pio Kunststoffe GmbH & Co., 79111 Freiburg (DE)
(72) Erfinder: Roth, Roland, Dipl.-Wirtschaftsing., W-7835 Teningen-Nimburg (DE); Schick, Henning, Dipl.-Ing., W-7843 Heitersheim (DE); Bloo, Johann, A-4863 Seewalchen (AT); Zacek, Franz, A-4840 Vöcklabruck (AT)
(74) Vertreter: Patent- und Rechtsanwaltssozietät, Schmitt, Maucher & Börjes

(56) Entgegenhaltungen:
- EP-A- 0 314 365
- FR-A- 1 441 508
- WORLD PATENTS INDEX LATEST Derwent Publications Ltd, London, GB AN 90-338093 [45], DW9045 & JP-A-224746

## Beschreibung

Die Erfindung betrifft ein Verfahren zum Kaschieren einer ungereckten Folie aus Polyethylen oder dessen Copolymeren mit einer gereckten Folie aus Polyethylen oder deren Copolymeren. Die Erfindung betrifft ferner eine Vorrichtung zum Verbinden einer gereckten Folie mit einer ungereckten Folie durch Kaschieren sowie schließlich eine mehrschichtige Folie, bei welcher eine gereckte und eine ungereckte Folie aufeinander kaschiert sind.

Aus der FR-A-1 441 508 ist es bereits bekannt, eine unverstreckte oder ungereckte Folie mit einer gereckten Folie, die unmittelbar zuvor gereckt wurde, zu verbinden. Das Verbinden erfolgt dabei jedoch durch eine weitere Querverstreckung und Erwärmung der beiden Folien. Auf diese Weise entsteht ein Verbund nur aus gereckten Folien und es ist ein entsprechender Aufwand zur Durchführung dieses Verfahrens erforderlich.

Es ist aus der Praxis bereits bekannt, gereckte und ungereckte Folien durch Kaschieren zu verbinden, um einerseits den Vorteil der höheren Festigkeit der gereckten Folie in deren Streckrichtung zu erhalten, andererseits aber auch die Festigkeit in Querrichtung dazu sowie insgesamt die Steifigkeit einer solchen Verbundfolie zu erhöhen. Wirtschaftliche Kaschierverfahren sehen dabei bisher vor, daß die beiden Folien durch Zwischenlage eines Klebstoffes verbunden werden, wobei der Klebvorgang unterhalb der Kristallit-Schmelztemperatur der gereckten Folie stattfinden muß, damit das Resultat der Reckung unter dieser Temperatur während des Klebevorganges nicht wieder aufgehoben wird.

Dies bedeutet, daß eine solche, bezüglich der Festigkeitswerte vorteilhafte mehrschichtige Verbundfolie einen Kleber enthält, der vor allem beim Recycling stört und einen zusätzlichen Kostenfaktor bei der Herstellung darstellt.

Es besteht deshalb die Aufgabe, ein Verfahren, eine Vorrichtung und eine mehrschichtige Folie der eingangs erwähnten Art zu schaffen, wodurch eine spätere Wiederaufbereitung bzw. ein Recycling begünstigt ist und dennoch die Herstellung preiswert durchgeführt werden kann.

Zur Lösung dieser Aufgabe sieht die Erfindung das eingangs erwähnte Verfahren zum Kaschieren einer ungereckten Folie aus Polyethylen und/oder dessen Copolymeren mit einer gereckten Folie aus Polyehtylen und/oder dessen Copolymeren vor, wobei die zu reckende Folie vorgeheizt in einen Streckbereich oder Streckspalt transportiert, im Durchlauf monoaxial gereckt und anschließend nachtemperiert wird und wobei die ungereckte Folie kontinuierlich und mit gleicher Geschwindigkeit wie die gereckte Folie hinter deren Streckbereich unter Ausnutzung der für die Reckung notwendigen Wärme mit dieser zusammengeführt, an diese angepreßt und dadurch mit ihr verbunden und die so gebildete mehrschichtige Folie kontinuierlich abtransportiert oder abgezogen wird.

Die gleiche Vorschubgeschwindigkeit der gereckten und der ungereckten Folie braucht dabei exakt nur in dem unmittelbaren Preßbereich, in welchem die Folien zusammengebracht werden, zu bestehen. In vorteilhafter Weise wird dabei die zur Reckung der verstreckten Folie benötigte Wärme mitausgenutzt, um den Kaschiervorgang mit der ungereckten Folie durchzuführen. Ein Klebstoff ist also nicht erforderlich. Gleichzeitig wird die Gefahr vermieden, daß die Kaschier-Wärme das Resultat der Reckung der gestreckten Folie wieder zerstört, weil genau diejenige Erwärmung ausgenutzt wird, die bei der Streckung und unmittelbar danach erforderlich ist. Durch die Verwendung von Polyethylen oder dessen Copolymeren für die beiden Folien wird nicht nur Klebstoff vermieden, sondern eine Wiederaufarbeitung oder ein Recycling der Verbundfolie ist begünstigt.

Das Verfahren sieht also vor, daß praktisch während der Streckung der einen Folie unmittelbar hinter dem Streckbereich das Kaschieren mit der ungereckten Folie noch unter Beibehaltung der Erwärmung der gestreckten Folie durchgeführt wird und die Folien bezüglich ihres Werkstoffes übereinstimmen oder nahezu übereinstimmen. Es kann also in sehr wirtschaftlicher Weise die maschinelle Einrichtung zum Recken der Folie für das Kaschieren mitausgenutzt werden. Die Werkstoffwahl für die Folien ergibt noch den Vorteil, daß eine Verbundfolie mit einer größeren Festigkeit in Streckrichtung der gereckten Folienschicht und mit verminderter Spleißneigung in Querrichtung durch die zweite nichtgestreckte Folienschicht erzielt wird, ohne bei einer späteren Materialaufarbeitung eine Materialmischung zu erhalten.

Besonders zweckmäßig ist es dabei, wenn die ungereckte Folie vor dem Kaschieren vorgeheizt wird. Entsprechend schnell und sicher erfolgt die Wärmekaschierung und entsprechend hoch kann die Transport- oder Vorschubgeschwindigkeit im Kaschierbereich sowie auch dahinter sein. Eine nachträgliche Reckung zur Verbindung der Schichten des Folienverbundes wird vermieden.

Insgesamt kann dabei so verfahren werden, daß beide Folien im kontinuierlichen Durchlauf im Bereich der Nachtemperierung der gereckten Folie zusammengeführt, unter Druck aufeinander kaschiert und danach abgekühlt werden. Da auch nach einem Reckvorgang eine Nachkühlung durchgeführt wird, erhöht sich also der Aufwand durch den Kaschiervorgang kaum gegenüber dem reinen Streckvorgang. Gleichzeitig wird Klebstoff vermieden, der die Wiederaufarbeitung einer derartigen mehrschichtigen oder Verbund-Folie erschweren oder gar unmöglich machen würde.

Die gereckte Folie kann nach dem Recken weiterhin vorgespannt werden und diese Spannung kann noch im Bereich der Kaschierung der beiden Folien sowie vorzugsweise bei deren Weitertransport aufrechterhalten werden. Dadurch wird vermieden, daß eventuell im Kaschierbereich das Resultat der Reckung ganz oder teilweise zerstört werden könnte.

Zweckmäßig ist dabei, wenn beide Folien im Bereich ihrer Zusammenführung etwa auf die Recktemperatur der gereckten Folie oder wenig darunter erwärmt werden.

Die zur Lösung der genannten Aufgabe dienende, eingangs genannte Vorrichtung ist insbesondere zur Durchführung des vorbeschriebenen Verfahrens geeignet und dadurch gekennzeichnet, daß an einer Reckvorrichtung zum Recken von Kunststoffolien mit Heizwalze(n) Streckwalzen und in Laufrichtung der Folie hinter den Streckwalzen angeordneter Temperierwalze oder dergleichen wenigstens eine Zuführ- oder Anpreßwalze zum Andrücken einer nichtgereckten Folie an die gereckte Folie hinter deren Streckbereich vorgesehen ist, wobei die nichtgereckte Folie mit gleicher Geschwindigkeit wie die gereckte Folie zugeführt wird, und daß die Anpreßwalze für die nichtgereckte Folie unmittelbar an der hinter den Streckwalzen angeordneten Temperierwalze der Reckvorrichtung angeordnet und bei Gebrauch angepreßt ist.

Reckvorrichtungen für Folien sind an sich bekannt und dienen zum Strecken von Kunststoffolien unter Wärme- und Zugkrafteinwirkung. Durch die erfindungsgemäße Vorrichtung kann nun eine ungereckte Folie hinter dem Reckspalt an einer vorzugsweise beheizten Walze, die zur Erzeugung des Reckzuges dient oder beiträgt, zugeführt und dort unter Ausnutzung der Reckwärme aufkaschiert werden. In vorteilhafter Weise kann also eine bekannte Vorrichtung zum Recken durch eine Zusatzeinrichtung so umgestaltet oder ausgebaut werden, daß das erfindungsgemäße Verfahren, nämlich das kombinierte Recken und Kaschieren, durchgeführt werden kann.

In Laufrichtung der ungereckten Folie vor der Anpreßwalze kann wenigstens eine Heizwalze zum Vorheizen der ungereckten Folie vorgesehen sein. Dadurch kann auch die ungereckte Folie auf eine entsprechend hohe Temperatur gebracht und somit der Wärme-Kaschier-Vorgang beschleunigt werden.

Um eine bestmögliche Aufheizung der ungereckten Folie zu erzielen, kann der Umschlingungswinkel der Vorheiz-Walze wenigstens 180°, vorzugsweise mehr als 180°, zum Beispiel etwa 270° betragen. Zusätzlich ist es möglich, daß mehrere Heizwalzen für die ungereckte Folie vorgesehen und S-förmig von der Folie umschlungen sind.

Um die Heizwärme möglichst wirkungsvoll für den Kaschiervorgang auf die ungereckte Folie übertragen zu können, kann die in Laufrichtung der ungereckten Folie dem Kaschierbereich am nächsten liegende Heizwalze die ungereckte Folie auf ihrer Kaschierseite beaufschlagen. Die Umschlingung der Heizwalze durch die ungereckte Folie erfolgt also derart, daß deren spätere Berührseite in unmittelarem Kontakt mit der Heizwalze ist.

Zwischen den Streckwalzen der Reckvorrichtung und der Anpreßwalze für die nichtgereckte Folie kann insbesondere an der Temperierwalze oder Kaschierwalze eine Andrückwalze zum Andrücken und Glätten der gereckten Folie vorgesehen sein. Dadurch wird diese gereckte Folie bestmöglich geglättet, kurz bevor die ungereckte Folie mit ihr in Berührung und unter Anpreßdruck kommt. Somit können eventuelle Verwerfungen und Lufteinschlüsse vermieden werden.

Eine mehrschichtige Folie, bei welcher eine gereckte und eine ungereckte Folie zu einem Verbund aufeinander kaschiert sind, kann erfindungsgemäß dadurch gekennzeichnet sein, daß die einander zugewandten und sich berührenden Schichten der einzelnen Folien aus artgleichem oder übereinstimmendem Werkstoff, nämlich aus Polyethylen und/oder dessen Copolymeren, bestehen und unter Ausnutzung der Erwärmung und der Reckspannung der gereckten Folie bei deren Verstreckung unter Wärme und Druck unmittelbar aufeinander kaschiert sind. Eine Zwischenschicht aus Klebstoff kann auf diese Weise entfallen.

Die Vorteile dieser zweckmäßigen und einfachen Kaschierung können auch dann zum Tragen kommen, wenn wenigstens eine der durch Kaschieren verbundenen Folien, insbesondere die ungereckte Folie, auf der der Berührseite abgewandten Seite eine weitere Folie oder Beschichtung, insbesondere aus anderem Werkstoff, trägt. Vor allem die ungereckte Folie könnte ihrerseits schon eine Verbundfolie oder ein Laminat oder dergleichen sein, wobei aber die Kaschierseite aus artgleichem Werkstoff wie die mit ihr in Berührung kommende Schicht der gereckten Folie besteht.

Insgesamt ergibt sich ein Verfahren, eine Vorrichtung und eine mehrschichtige Folie, bei welcher Polyethylenfolien monoaxial verstreckt werden, wobei dies in bekannter Weise bei Temperaturen erfolgt, die kurz unter dem Kristallit-Schmelzpunkt liegen. Das Reckverhältnis kann dabei zwischen 1 : 1,5 und 1 : 10 liegen. Im unmittelbaren Anschluß an die Verstreckung, die nach der Erwärmung der Folie zwischen zwei mit unterschiedlichen Geschwindigkeiten laufenden Walzen in bekannter Weise erfolgt, kann nun eine ein- oder mehrschichtige unverstreckte Polyethylenfolien auf die heiße, verstreckte Folie auflaufen, wo sie mittels einer vorzugsweise gummierten, der Breite der Zulauffolie angepassten Walze angepreßt wird. Dadurch, daß der Kristallit-Schmelzpunkt der ungereckten Zulauf-Folie niedriger als der der gestreckten Folie liegt, wird beim Zusammenfügen der gewünschte feste Verbund durch Wärmekaschierung erzeugt. Dabei ist dieses Verfahren energiesparend, weil die Aufheizung und Erwärmung der zu reckenden Folie beim Kaschieren noch mit ausgenutzt werden kann. Insgesamt sind dabei hohe Geschwindigkeiten der Produktion möglich, insbesondere, wenn auch die Zulauf-Folien vorgewärmt werden, wobei in vorteilhafter Weise ein verbindender Klebstoff zwischen den Folien vermieden wird. Gegebenenfalls kann in gleicher Weise auf beide Seiten der gereckten Folie eine ungereckte Folie aufkaschiert werden.

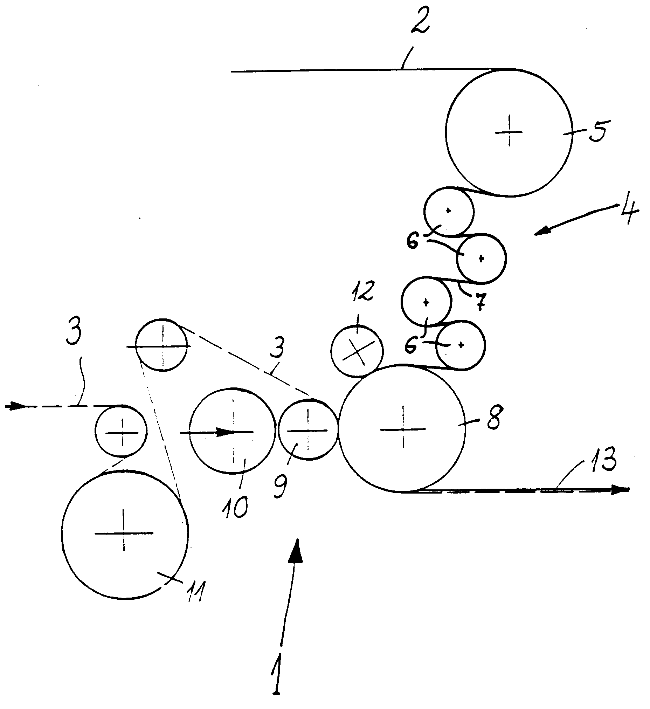

Nachstehend ist die Erfindung mit ihren wesentlichen Einzelheiten anhand der Zeichnung in einem Ausführungsbeispiel noch näher beschrieben.

Die einzige Figur zeigt in schematisierter Darstellung eine erfindungsgemäße Vorrichtung zum Recken einer Folie und zum Zuführen einer ungereckten Folie, die mit der gereckten Folie hinter deren Verstreckung durch Kaschieren verbunden wird.

Eine im ganzen mit 1 bezeichnete Vorrichtung dient zum Verbinden einer zuallererst ungereckten, dann jedoch monoaxial gereckten Folie 2 mit einer ungereckt bleibenden Folie 3 durch Kaschieren unter Wärme und Druck.

Dabei erkennt man in der einzigen Figur in schematisierter Seitenansicht eine im ganzen mit 4 bezeichnete Reckvorrichtung.

Die unverstreckte Folie 2 wird über eine Vorheizwalze 5 (die gegebenenfalls durch weitere Vorheizwalzen ergänzt werden kann) den Streckwalzen 6 zugeführt. Die monoaxiale Verstreckung erfolgt im Streckspalt 7, wobei sich die Streckwalzen hinter den Streckspalt 7 schneller drehen. Den Streckwalzen ist eine Temperierwalze 8 nachgestellt, die gemeinsam mit der Andrückwalze 12 die gestreckte Folie für die Kaschierung vorbereitet.

Zu der Vorrichtung 1 gehört außerdem eine Zuführ- oder Anpreßwalze 9 zum Andrücken der nicht gereckten Folie 3 an die gereckte Folie 2 hinter deren Streckbereich. Die Anpreßwalze 9 wird dabei durch eine Stützwalze 10 unterstützt und gegen eine Durchbiegung gesichert.

Im Ausführungsbeispiel ist die Anpreßwalze 9 für die nicht gereckte Folie 3 unmittelbar an der hinter den Streckwalzen 6 angeordneten Temperierwalze 8 der Reckvorrichtung 4 vorgesehen und bei Gebrauch angepreßt.

In Laufrichtung der ungereckten Folie 3 vor der Anpreßwalze 9 ist eine Heizwalze 11 zum Vorheizen der ungereckten Folie 3 vorgesehen. Deren Umschlingungswinkel ist dabei größer als 180° und beträgt beispielsweise etwa 27o°. Falls mehrere Heizwalzen 11 hintereinander liegen, können diese von der Folie 3 S-förmig umschlungen sein, um eine gute und effektive Erwärmung zu bewirken.

Die in Laufrichtung der ungereckten Folie 3 dem Kaschierbereich an der Temperierwalze 8 am nächsten liegende Heizwalze, im Ausführungsbeispiel die einzige Heizwalze 11, beaufschlagt dabei die ungereckte Folie 3 auf ihrer Kaschierseite, so daß diese besonders gut erwärmt wird.

Zwischen den Streckwalzen 6 der Reckvorrichtung 4 und der Anpreßwalze 9 ist an der Temperierwalze 8 noch eine Andrückwalze 12 für die gereckte Folie 2 vorgesehen, wodurch diese so glatt und fest auf der Temperierwalze 8 aufliegend wie möglich gehalten wird, bevor sie mit der Folie 3 an der Berührstelle zwischen Temperierwalze 8 und Anpreßwalze 9 in Kaschierberührung kommt.

Mit dieser Vorrichtung 1 kann also eine gereckte Folie 2 und eine ungereckte Folie 3 aufeinanderkaschiert werden, so daß insgesamt hinter der Temperierwalze 8 eine mehrschichtige Folie 13 oder Verbundfolie abgezogen werden kann, bei welcher die einander zugewandten und sich berührenden Schichten der Einzelfolien aus artgleichem oder übereinstimmendem Werkstoff, insbesondere aus Polyethylen oder dessen Copolymeren besteht und die unter Ausnutzung der Reckwärme und der Reckspannung der gereckten Folie 2 bei deren Reckung unter Wärme und Druck mit der ungereckten Folie 3 verbunden wurde.

Es sei noch erwähnt, daß wenigstens eine der durch Kaschieren verbundenen Folien, bevorzugt die ungereckte Folie 3, auf der der Berührseite abgewandten Seite eine weitere Folie oder Beschichtung, insbesondere aus anderem Werkstoff, tragen könnte. Für eine Wiederaufarbeitung der mehrschichtigen Folie 13 ist es jedoch besonders günstig und vorteilhaft, wenn alle verbundenen Folien vollständig aus Polyethylen oder einem Copolymer davon, also aus gleichem oder gleichartigem Werkstoff bestehen.

Die Vorrichtung 1 erlaubt ein Verfahren zum Kaschieren einer Folie 3 mit einer gereckten Folie 2, wobei die zunächst ungereckte Folie 2 vorgeheizt, in einen Streckbereich 7 transportiert, im Durchlauf gereckt und anschließend nachtemperiert wird, wobei eine nicht gereckte Folie 3 kontinuierlich und mit gleicher Geschwindigkeit wie die gereckte Folie 2 hinter deren Streckbereich oder dem Streckspalt 7 mit dieser zusammengeführt und unter Wärme an diese angepreßt wird, so daß eine Folie auf die andere aufkaschiert wird.

Dabei bestehen die gereckte und die ungereckte Folie zumindest an den einander zugewandten und miteinander in Berührkontakt gebracht Flächen aus gleichem oder artgleichem Werkstoff, so daß eine Wärmekaschierung ohne zusätzliche Zwischenschicht, beispielsweise ohne Klebstoffschicht durchgeführt werden kann, wonach die sogebildete mehrschichtige Folie 13 kontinuierlich abtransportiert oder abgezogen wird. Sie kann dabei nach dem Kaschiervorgang in für das Recken von Folien bekannterweise abgekühlt werden. Dabei kann zur Beschleunigung des Verfahrens die ungereckte Folie 3 vor dem Kaschieren vorgeheizt werden. Somit können beide Folien im Bereich ihrer Zusammenführung etwa auf die Recktemperatur der gereckten Folie 2 oder wenig darunter erwärmt werden, wobei in vorteilhafter Weise die Folie 2 diese Temperatur von ihrem Reckvorgang her schon aufweist.

Zum Kaschieren einer Folie 3 mit einer gereckten Folie 2 wird unmittelbar im Anschluß an den Reckvorgang für die Folie 2 die ungereckte Folie 3 zugeführt und gewissermaßen innerhalb der Reckvorrichtung 4 unter Ausnutzung der Reckwärme - bevorzugt nach einer eigenen Vorheizung - aufkaschiert, so daß eine wärmekaschierte mehrschichtige Folie 13 gebildet wird, bei welcher beide Folien 2 und 3 aus gleichem oder artgleichem Werkstoff bestehen können, was für eine Wiederaufarbeitung besonders günstig ist. Die Vorteile einer solchen aus gereckter und ungereckter Folie bestehenden Verbundfolie werden also erreicht, ohne daß zur Bildung des Verbundes Klebstoff erforderlich ist.

## Patentansprüche

1. Verfahren zum Kaschieren einer ungereckten Folie (3) aus Polyethylen und/oder dessen Copolymeren mit einer gereckten Folie (2) aus Polyethylen und/oder dessen Copolymeren, wobei die zu reckende Folie (2) vorgeheizt in einen Streckbereich oder Streckspalt (7) transportiert, im Durchlauf monoaxial gereckt und anschließend nachtemperiert wird und wobei die ungereckte Folie (3) kontinuierlich und mit gleicher Geschwindigkeit wie die gereckte Folie (2) hinter deren Streckbereich (7) unter Ausnutzung der für die Reckung notwendigen Wärme mit dieser zusammengeführt, an diese angepreßt und dadurch mit ihr verbunden und die so gebildete mehrschichtige Folie (13) kontinuierlich abtransportiert oder abgezogen wird.

2. Verfahren nach Anspruch 1, dadurch gekennzeichnet, daß die ungereckte Folie (3) vor dem Kaschieren vorgeheizt wird.

3. Verfahren nach Anspruch 1 oder 2, dadurch gekennzeichnet, daß beide Folien (2, 3) im kontinuierlichen Durchlauf im Bereich der Nachtemperierung der gereckten Folie (2) zusammengeführt, unter Druck aufeinander kaschiert und danach abgekühlt werden.

4. Verfahren nach einem der Ansprüche 1 bis 3, dadurch gekennzeichnet, daß die gereckte Folie (2) nach dem Recken weiterhin vorgespannt wird und diese Spannung noch im Bereich der Kaschierung der bei den Folien sowie vorzugsweise deren Weitertransport aufrechterhalten wird.

5. Verfahren nach einem der Ansprüche 1 bis 4, dadurch gekennzeichnet, daß beide Folien im Bereich ihrer Zusammenführung und Verbindung etwa auf die Recktemperatur der gereckten Folie (2) oder wenig darunter erwärmt werden.

6. Vorrichtung (1) zum Verbinden einer gereckten Folie (2) mit einer ungereckten Folie (3) durch Kaschieren, insbesondere zur Durchführung des Verfahrens nach einem der Ansprüche 1 bis 5, **dadurch gekennzeichnet,** daß an einer Reckvorrichtung (4) zum Recken von Kunststoffolien (2) mit Heizwalze(n) (5), Streckwalzen (6) und in Laufrichtung der Folie (2) hinter den Streckwalzen (6) angeordneter Temperierwalzen (8) oder dergleichen wenigstens eine Zuführ- oder Anpreßwalze (9) zum Andrücken einer nicht gereckten Folie (3) an die gereckte Folie (2) hinter deren Streckbereich (7) vorgesehen ist, wobei die nicht gereckte Folie (3) mit gleicher Geschwindigkeit wie die gereckte Folie (2) zugeführt wird, und daß die Anpreßwalze (9) für die nicht gereckte Folie (3) unmittelbar an der hinter den Streckwalzen (6) angeordneten Temperierwalze (8) der Reckvorrichtung (4) angeordnet und bei Gebrauch angepreßt ist.

7. Vorrichtung nach Anspruch 6, dadurch gekennzeichnet, daß in Laufrichtung der ungereckten Folie (3) vor der Anpreßwalze (9) wenigstens eine Heizwalze (11) zum Vorheizen der ungereckten Folie (3) vorgesehen ist.

8. Vorrichtung nach Anspruch 6 oder 7, dadurch gekennzeichnet, daß der Umschlingungswinkel der Vorheiz-Walze (11) wenigstens 180°, vorzugsweise mehr als 180°, zum Beispiel etwa 270° beträgt.

9. Vorrichtung nach einem der Ansprüche 6 bis 8, dadurch gekennzeichnet, daß mehrere Heizwalzen (11) für die ungereckte Folie (3) vorgesehen und von dieser S-förmig umschlungen sind.

10. Vorrichtung nach einem der Ansprüche 6 bis 9, dadurch gekennzeichnet, daß die in Laufrichtung der ungereckten Folie (3) dem Kaschierbereich und der Anpreßwalze (9) am nächsten liegende Heizwalze (11) die ungereckte Folie (3) auf ihrer Kaschierseite beaufschlagt.

11. Vorrichtung nach einem der Ansprüche 6 bis 10, dadurch gekennzeichnet, daß zwischen den Streckwalzen (6) der Reckvorrichtung (4) und der Anpreßwalze (9) für die nicht gestreckte Folie (3), insbesondere an der Temperierwalze (8) oder Kaschierwalze eine Andrückwalze (12) zum Andrücken und Glätten der gereckten Folie (2) vorgesehen ist.

12. Mehrschichtige Folie (13), bei welcher eine gereckte Folie (2) und eine ungereckte Folie (3) aufeinanderkaschiert sind, insbesondere hergestellt mit dem Verfahren nach einem der Ansprüche 1 bis 5 und der Vorrichtung (1) nach einem der Ansprüche 6 bis 11, **dadurch gekennzeichnet,** daß die einander zugewandten und sich berührenden Schichten der einzelnen Folien (2, 3) aus artgleichem oder übereinstimmendem Werkstoff, nämlich aus Polyethylen und/oder dessen Copolymeren, bestehen und unter Ausnutzung der Erwärmung und der Reckspannung der gereckten Folie (2) bei deren Verstreckung unter Wärme und Druck unmittelbar aufeinanderkaschiert sind.

13. Mehrschichtige Folie nach Anspruch 12, dadurch gekennzeichnet, daß wenigstens eine der durch Kaschieren verbundenen Folien, insbesondere die ungereckte Folie (3), auf der der Berührseite abgewandten Seite eine weitere Folie oder Beschichtung, insbesondere aus anderem Werkstoff, trägt.

## Claims

1. A method of making a laminate from an unstretched foil (3) of polyethylene and/or the copolymers of polyethylene and a stretched foil (2) of polyethylene and/or the copolymers of polyethylene, wherein the foil (2) to be stretched is transported in a preheated condition into a stretching zone or stretching gap (7), is monoaxially stretched in passage and is then tempered, and wherein the unstretched foil (3) is moved continuously and at the same speed as the stretched foil (2) so as to be brought together therewith after the stretching zone (7) and to be pressed thereagainst and by this means is bonded thereto and the multilayer foil (13) thus formed is continuously conveyed away or drawn off.

2. A method as claimed in claim 1, characterized in that the unstretched foil (3) is preheated before lamination.

3. A method as claimed in claim 1 or claim 2, characterized in that both foils (2, 3) are brought together in continuous passage in the tempering zone of the stretched foil (2), are laminated one upon the other under pressure and are then cooled.

4. A method as claimed in any one of claims 1 to 3, characterized in that after the stretched foil (2) has been stretched, said foil remains in stretched condition and such is maintained in the laminating zone of the two foils and preferably during their further conveyance.

5. A method as claimed in any one of claims 1 to 4, characterized in that in the zone where the two foils are brought together and bonded, they are heated to about or slightly below the stretching temperature of the stretched foil (2).

6. An apparatus (1) for making a laminate from a stretched foil (2) and an unstretched foil (3), particularly for carrying out the method as claimed in any one of claims 1 to 5, **characterized in that** a stretching apparatus (4) for stretching plastic foils (2) with heating roller(s) (5), stretching rollers (6) and, downstream of the latter - as considered in the moving direction of the foil (2)- , tempering rollers (8) or the like, is provided with at least one feed roller or pressure roller (9) for pressing an unstretched foil (3) against the stretched foil (2) downstream of the stretching zone thereof, whereby the unstretched foil (3) is fed at the same speed as the stretched foil (2), and that the pressure roller (9) for the unstretched foil (3) is arranged directly at, and in use is pressed against, the tempering roller (8) that is arranged downstream of the stretching rollers (6) and forms part of the stretching apparatus (4).

7. An apparatus as claimed in claim 6, characterized in that at least one heating roller (11) for preheating the unstretched foil (3) is provided ahead of the pressure roller (9), as considered in the moving direction of the unstretched foil (3).

8. An apparatus as claimed in claim 6 or claim 7, characterized in that the foil is trained over the preheating roller (11) along an angle of at least 180°, preferably more than 180°, for example about 270°.

9. An apparatus as claimed in any one of claims 6 to 8, characterized in that a plurality of heating rollers (11) are provided for the unstretched foil (3) and said foil is trained over them in the shape of a letter S.

10. An apparatus as claimed in any one of claims 6 to 9, characterized in that the heating roller (11) closest to the laminating zone and pressure roller (9), as considered in the moving direction of the unstretched roll (3), is applied to the laminating side of the unstretched foil (3).

11. An apparatus as claimed in any one of claims 6 to 10, characterized in that an auxiliary roller (12) for pressing on and smoothing the stretched foil (2) is provided between the stretching rollers (6) of the stretching apparatus (4) and the pressure roller (9) for the unstretched foil (3), particularly at the tempering roll (8) or laminating roll.

12. A multilayer foil (13), in which a stretched foil (2) and an unstretched foil (3) are laminated one upon the other, in particular produced with the method as claimed in any one of claims 1 to 5 and apparatus (1) as claimed in any one of claims 6 to 11, **characterized in that** the layers facing and contacting each other of the individual foils (2, 3) consist of material that is identical or of the same kind, namely of polyethylene and/or the copolymers of polyethylene and are laminated one directly upon the other with the application of heat and pressure and with the use of the temperature rise and tension of the stretched foil (2) from stretching thereof.

13. A multilayer foil as claimed in claim 12, characterized in that the side facing away from the contact side of at least one of the foils bonded by lamination, particularly of the unstretched foil (3), carries a further foil or coating, particularly one made of other material.

## Revendications

1. Procédé pour doubler une feuille non étirée (3) en polyéthylène et/ou en copolymères de celui-ci au moyen d'une feuille étirée (2) en polyéthylène et/ou en copolymères de celui-ci, dans lequel on déplace la feuille étirée (2) dans une région d'étirage ou dans un intervalle d'étirage (7) à l'état préchauffé, on l'étire en continu selon un seul axe, et on la remet ensuite à température, et dans lequel on réunit la feuille non étirée (3) à la feuille étirée (2) derrière l'intervalle d'étirage (7) de celle-ci, en continu et à la même vitesse qu'elle, en utilisant la chaleur qui est nécessaire pour l'étirage, et on la presse contre celle-ci en la liant ainsi à elle, cependant que la feuille à plusieurs couches (13) qui est ainsi formée est évacuée ou retirée en continu.

2. Procédé selon la revendication 1, caractérisé par le fait que la feuille non étirée (3) est préchauffée avant le doublage.

3. Procédé selon la revendication 1 ou 2, caractérisé par le fait que les deux feuilles (2, 3) sont réunies pendant le passage continu dans la région de la remise à température de la feuille étirée (2), qu'elles sont assemblées par doublage sous pression, et qu'elles sont ensuite refroidies.

4. Procédé selon l'une des revendications 1 à 3, caractérisé par le fait que la feuille étirée (2) est en outre soumise à une tension préalable après l'étirage, et que cette tension est encore conservée dans la région de l'assemblage par doublage des deux feuilles, ainsi que, de préférence, dans celle de la suite de leur déplacement.

5. Procédé selon l'une des revendications 1 à 4, caractérisé par le fait que les deux feuilles, dans la région de leur réunion et de leur liaison, sont chauffées à peu près à la température d'étirage de la feuille étirée (2) ou légèrement au-dessous.

6. Dispositif (1) pour relier une feuille étirée (2) à une feuille non étirée (3) par doublage, en particulier pour la mise en oeuvre du procédé selon l'une des revendications 1 à 5, caractérisé par le fait que, sur un dispositif d'étirage (4) qui est destiné à étirer des feuilles en matière plastique (2) et qui comprend un ou plusieurs cylindres de chauffage (5), des cylindres d'étirage (6) et des cylindres de remise à température (8) ou similaires disposés derrière les cylindres d'étirage (6) dans la direction du défilement de la feuille (2), il est prévu au moins un cylindre d'amenée ou de pressage (9) qui est destiné à presser une feuille non étirée (3) sur la feuille étirée (2) derrière la zone d'étirage (7) de celle-ci, cependant que la feuille non étirée (3) est amenée à la même vitesse que la feuille étirée (2), et que le cylindre de pressage (9) qui est destiné à la feuille non étirée (3) est disposé directement sur le cylindre de remise à température (8) du dispositif d'étirage (4), lequel est disposé derrière les cylindres d'étirage (6), en étant serré lors de l'utilisation.

7. Dispositif selon la revendication 6, caractérisé par le fait qu'au moins un cylindre de chauffage (11) destiné à préchauffer la feuille non étirée (3) est prévu avant le cylindre de pressage (9) dans la direction du défilement de la feuille non étirée (3).

8. Dispositif selon la revendication 6 ou 7, caractérisé par le fait que l'angle d'enroulement du cylindre de préchauffage (11) est au moins égal à 180°, de préférence supérieur à 180° et par exemple égal à 270° environ.

9. Dispositif selon l'une des revendications 6 à 8, caractérisé par le fait qu'il est prévu plusieurs cylindres de chauffage (11) pour la feuille non étirée (3), et que cette dernière est enroulée sur ceux-ci en forme de S.

10. Dispositif selon l'une des revendications 6 à 9, caractérisé par le fait que, dans la direction du défilement de la feuille non étirée (3), le cylindre de chauffage (11) qui est le plus proche de la zone de doublage et du cylindre de pressage (9) agit sur le coté du doublage de la feuille non étirée (3).

11. Dispositif selon l'une des revendications 6 à 10, caractérisé par le fait qu'un cylindre de pressage (12) est prévu pour presser et lisser la feuille étirée (2) entre les cylindres d'étirage (6) du dispositif d'étirage (4) et le cylindre de pressage (9) qui est destiné à la feuille non étirée (3), et en particulier sur le cylindre de remise à température (8) ou sur le cylindre de doublage.

12. Feuille à plusieurs couches (13), dans laquelle une feuille étirée (2) et une feuille non étirée (3) sont assemblées par doublage et qui est en particulier fabriquée au moyen du procédé selon l'une des revendications 1 à 5 et du dispositif (1) selon l'une des revendications 6 à 11, caractérisée par le fait que les couches des diverses feuilles (2, 3) qui sont tournées les unes vers les autres et qui sont en contact entre elles sont constituées par une matière du même genre ou compatible, à savoir par du polyéthylène et/ou par des copolymères de celui-ci, et qu'elles sont directement assemblées par doublage lors de leur étirage sous l'effet d'une chaleur et d'une pression en utilisant le chauffage et la tension d'étirage de la feuille étirée (2).

13. Feuille à plusieurs couches selon la revendication 12, caractérisée par le fait que l'une au moins des feuilles reliées par doublage, et en particulier la feuille non étirée (3), porte sur le côté opposé au côté du contact une autre feuille ou un revêtement, en particulier constitué par une autre matière.
